# EUROPÄISCHE PATENTANMELDUNG

(11) **EP 2 057 875 A1**
(43) Veröffentlichungstag der Anmeldung: **13.05.2009**
(21) Anmeldenummer: 07120283.2
(22) Anmeldetag: 08.11.2007
(51) Int. Cl.: A01B 69/00

(54) **Verfahren und Anordnung zur Erfassung des Pflanzenbestandes auf Landmaschinen**

(71) Anmelder: Leibniz-Institut für Agrartechnik Potsdam-Bornim e.V. (ATB), 14469 Potsdam (DE)
(72) Erfinder: Ehlert, Detlef, 14476, Potsdam (DE)
(74) Vertreter: Hengelhaupt, Jürgen

(57) **Zusammenfassung**

Die Erfindung betrifft ein Verfahren und eine Anordnung zur Erfassung des Pflanzenbestandes auf Landmaschinen mittels mindestens eines Laser-Abstandssensors (1), der in einer Montagehöhe (h_{S}), die größer ist als die zu erwartende Höhe des Pflanzenbestandes, jeweils in einem definierten Winkel (ϕ) zu der Landmaschine geneigt an dieser angeordnet ist.

Vorgeschlagen wird, dass der oder die um eine zu der Landmaschine senkrecht verlaufende Achse drehbar angeordneten Laser-Abstandssensoren in einem definierten Schwenkwinkel (α), gegebenenfalls alternierend, gedreht werden.
Die mit dem jeweiligen Laser-Abstandssensor (1) gemessenen Entfernungen (I_{R}) sind unabhängig vom ausgeführten Schwenkwinkel α. Außerdem erlaubt das Verfahren die Erfassung von Kanten des Pflanzenbestandes.

## Beschreibung

Die Erfindung betrifft ein Verfahren und eine Anordnung zur Erfassung des Pflanzenbestandes auf Landmaschinen mittels mindestens eines Laser-Abstandssensors.

Zur berührungslosen Ermittlung des Pflanzenbewuchses wurden bereits Vorrichtungen und ein Verfahren vorgeschlagen, die die Grundlage für die zielgerichtete Durchführung von Pflanzenschutzmaßnahmen bilden sollen (DE 198 58 157 A1; DE 198 58 168 A1). Der Schwerpunkt dieser Lösungen besteht darin, die Größe und den Standort von Kulturpflanzen und Unkräutern zu ermitteln.

Bei der zielgerichteten volumenspezifischen Applikation von Betriebsmitteln, vorrangig im Obstbau, wird mit der WO 02/091823 ein System zum Beeinflussen von Boden und Pflanzen vorgeschlagen, das die Pflanzen mittels umlaufendem monochromatischen pulsierenden Laserstrahls abtastet und somit ein räumliches Abbild des Baum- oder Strauchbestandes sowie des Bodens ermöglicht. Ein ähnlicher Messansatz wird von Tumbo et al. in Investigation of laser and ultrasonic ranging sensors for measurements of citrus canopy volume, Applied Engineering in Agriculture, 18 (3), (2002), S. 253-267 beschrieben.

Thösink et al., Optoelektronisches Sensorsystem zur Messung der Pflanzenbestandesdichte, Landtechnik 2, 2004, S. 78/79 beschreiben in ersten Ansätzen die Messung der Pflanzenbestandesdichte mit einem auf dem Markt bereits vorhandenen optoelektronischen Sensorsystem (Laser-Triangulationssensor). In Übereinstimmung mit dem vorgestellten Messprinzip befinden sich die Offenlegungsschriften DE 103 29 472 A1 und DE 103 49 324 A1.

Die Offenlegungschrift DE 103 46 541 A1 beschreibt ebenfalls eine Einrichtung und ein Verfahren zum Messen der Ausbildung von Pflanzenbeständen.

In der Offenlegungsschrift DE 101 30 665 A1 wird eine Vorrichtung zur Messung der Menge von auf dem Feld stehenden Pflanzen beschrieben. Es wird vorgeschlagen, dass ein Empfänger die Intensität oder Amplitude des reflektierten Anteils der von einem Sender ausgestrahlten elektromagnetische Wellen ermittelt, die von der Anzahl der Pflanzen pro Flächeneinheit und der Abmessung der Pflanzen abhängt.

In EP 0887 660 A2 werden eine Vorrichtung und ein Verfahren vorgeschlagen, um Bestandeskanten bei Feldkulturen, Bearbeitungsgrenzen oder entsprechende Leitgrößen zu erkennen. Diese Information wird genutzt, um Erntemaschinen (Mähdrescher, Feldhäcksler) und Maschinen z.B. zur Bodenbearbeitung (DE 197 43 884 A1) automatisch so zu lenken, dass eine konstante Arbeitsbreite bei gleichzeitiger Entlastung des Fahrers gewährleistet ist. Eine nähere messtechnische Erfassung und Bewertung physikalischer Parameter des Pflanzenbestandes erfolgen nicht.

Lasersensoren werden in vielen Bereichen der Wirtschaft eingesetzt, um berührungslos Abstände oder Entfernungen zu messen. In wissenschaftlichen Untersuchungen wurde nachgewiesen, dass Laser-Abstandssensoren auch erfolgreich eingesetzt werden können, um Pflanzenbestände hinsichtlich ihrer räumlichen physikalischen Ausbildung wie Pflanzenhöhen, Bedeckungsgrad, Dichte messtechnisch zu erfassen (siehe Ehlert et al., Assessment of laser rangefinder principles for measuring crop biomass, Proceedings of the 6th European Conference on Precision Agriculture 2007, Wageningen Academic Publishers, S. 317-324).

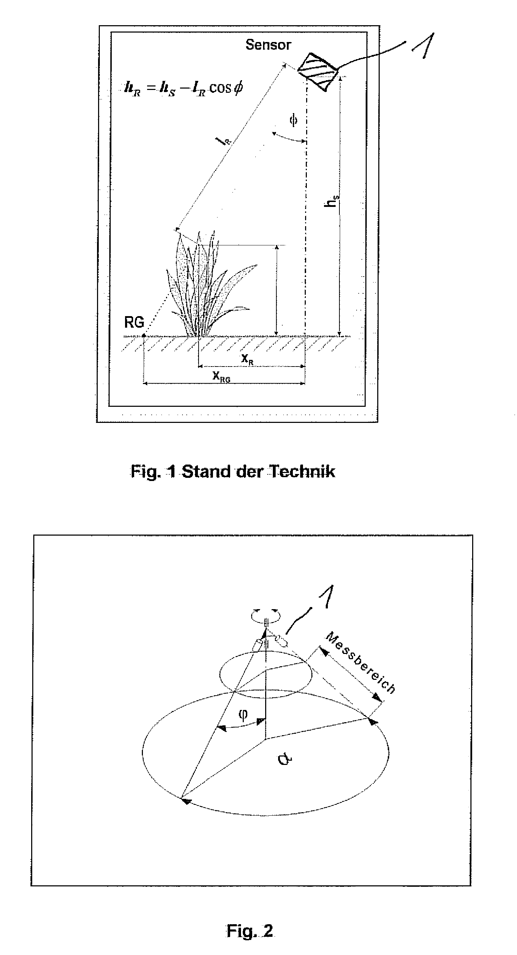

Da der Reflexionsabstand nicht nur vom Pflanzenbestand bestimmt wird, sondern ebenfalls von der Montagehöhe des Sensors, wurde bereits die parameterfreie Größe "Reflexionshöhe h_{R}" eingeführt, die nicht mehr von der Montagehöhe h_{S} des Sensors abhängig ist (Fig. 1).

Die Arbeitsbreiten von landwirtschaftlichen Dünge- und Pflanzenschutzgeräten können bis zu 36 m betragen, bei Mähdreschern und bei Feldhäckslern bis zu 10m. Um vor diesen Maschinen über der gesamten Arbeitsbreite mit Sensoren lückenlos Pflanzenparameter wie die Pflanzenmasse oder Inhaltsstoffe zu erfassen, müssen diese möglichst die gesamte Arbeitsbreite erfassen oder es sind so viele Sensoren anzuordnen, dass eine lückenlose Erfassung gewährleistet ist. Die Vielfachanordnung von Sensoren ist jedoch kostenintensiv. Außerdem bedingt eine höhere Anzahl von Sensoren auch eine höhere Ausfallrate.

Aufgabe der Erfindung ist es, ein Verfahren und eine Anordnung zur Erfassung des Pflanzenbestandes auf Landmaschinen anzugeben, bei denen der oder die Laser-Abstandssensoren in einer Montagehöhe, die größer ist als die zu erwartende Höhe des Pflanzenbestandes und in einem definierten Winkel (ϕ) zu der Landmaschine (Basismaschine) geneigt an dieser angeordnet sind. Mit dem Verfahren und der Anordnung soll die Anzahl der Sensoren minimiert werden, so dass ein möglichst großer Teil der Arbeitsbreite mit wenigen Sensoren erfasst wird, und diese sollen so anzuordnen und zu führen sein, dass ein Höchstmass an Repräsentativität der Messwerte erreicht wird.

Erfindungsgemäß wird die Aufgabe gelöst durch die Merkmale der Ansprüche 1 und 6. Zweckmäßige Ausgestaltungen sind Gegenstand der Unteransprüche.

Danach werden der oder die Laser-Abstandssensoren um eine zu der Landmaschine senkrecht verlaufende Achse in einem definierten Schwenkwinkel (α) drehbar angeordnet. Wird der Sensor verfahrensgemäß um die senkrechte Achse gedreht, so beschreibt der Strahl eine Fläche auf der Mantelfläche eines Kegels oder Kegelstumpfes. Durch diese Art der Laserführung wird erreicht, dass die mit dem jeweiligen Laser-Abstandssensor gemessenen Entfernungen unabhängig vom ausgeführten Schwenkwinkel α sind. Damit ist es nicht erforderlich, diesen in Echtzeit messtechnisch zu erfassen und zu verrechnen, um zum Beispiel die Reflexionshöhen und ihre Streuung zu messen.

Unter praktischen Einsatzbedingungen ist es auf Landmaschinen in der Regel sinnvoll, den Laser-Abstandssensor keine drehenden Bewegungen in einem 360°-Winkel ausführen zu lassen, sondern ihn nur in einem eingegrenzten Schwenkwinkelbereich, zum Beispiel α ≈ 90°, hin und her zu bewegen. Die Montagehöhe h_{S}, der Anstellwinkel ϕ und der Schwenkwinkel α des Laser-Abstandssensors bestimmen die Breite des erfassten Streifens des Pflanzenbestands. Die spezifische anforderungs-orientierte Bemessung dieser drei geometrischen Parameter eröffnet die Möglichkeit, sich den spezifischen Einsatzbedingungen auf den unterschiedlichen Landmaschinen optimal anzupassen.

Weiterhin bietet eine geeignete Anordnung der Laserführungseinrichtung (z.B. am Kabinendach oder seitlich an Schneidwerken) von Feldhäckslern, Mähdreschern und Mähmaschinen sowohl die Möglichkeit der Erfassung der Bestandesdichte als auch der Bestandeskante, die durch den vorhergehenden Mähvorgang entstanden ist.

Um die Bestandeskante in Form sich abrupt ändernder Reflexionshöhen erkennen zu können, ist in diesem Fall der Schwenkwinkel α so zu bemessen, dass der Laserstrahl ausreichend weit die Stoppeln außerhalb vor der Bestandeskante abtastet. Mit dieser Form der Sensoranbringung und -führung können die Messwerte vom Stoppelbereich (geringe Reflexionshöhe) und der Bestandeskante (große Reflexionshöhe) für die automatische Fahrtrichtungs- und Schnittbreitenregelung sowie die Messwerte vom noch nicht abgeschnittenen Bestandesstreifen zur Regelung der Vorfahrtgeschwindigkeit entsprechend der Bestandesdichte der zu erntenden Kultur genutzt werden. Voraussetzung ist hierbei, dass der Schwenkwinkel α in Echtzeit gemessen und mit den Reflexionshöhen bzw. den gemessenen Reflexionsabständen zeitgleich verrechnet wird.

Um die Bestandeskante sicher erkennen zu können, sollten in ihrem Bereich ausreichend Messwerte gewonnen werden. Dies ist vorzugsweise durch einen Antriebsmechanismus, zum Beispiel eine Kurbelschwinge oder Kurbelschleife, zu erreichen, bei dem einer der beiden Umkehrpunkte im Bereich der Bestandeskante liegt und der in diesem Bereich eine geringere Winkelgeschwindigkeit aufweist als im übrigen Bereich.. Durch Nutzen dieser kinematischen Eigenschaften entstehen infolge der reduzierten Winkelgeschwindigkeiten in den Umkehrpunkten bei gleicher Messfrequenz mehr Messwerte, die eine sicherere softwaretechnische Bestimmung der Bestandeskante unterstützen.

Die Erfindung soll nachstehend anhand von Ausführungsbeispielen näher erläutert werden. Die zugehörigen Zeichnungen zeigen in
- Fig. 1:: die Bestimmung der Reflexionshöhe,
- Fig. 2:: die kinematischen Parameter bei der erfindungsgemäßen Anordnung von Laser-Abstandssensoren,
- Fig. 3:: eine perspektivische Ansicht einer Sensoranordnung bei Traktoren mit Applikationstechnik,
- Fig. 4:: eine perspektivische Ansicht einer Sensoranordnung bei selbstfahrenden Erntemaschinen,
- Fig. 5:: eine perspektivische Ansicht einer Sensoranordnung an einem Schneidwerk.

Fig. 1 zeigt die bereits bekannte Anordnung eines Laser-Abstandssensors 1 zur Bestimmung der Reflexionshöhe h_{R} des Pflanzenbestandes. Der Laser-Abstandssensor 1 ist in einem Anstellwinkel Φ zu einer gedachten senkrechten Achse geneigt angestellt. Die Montagehöhe h_{S} muss höher sein als die Reflexionshöhe h_{R} des Pflanzenbestandes, die sich dann rechnerisch aus dem gemessenen Reflexionsabstand I_{R} unter Einbeziehung des Anstellwinkels Φ ergibt.

Fig. 2 zeigt die kinematischen Parameter, wenn der Laser-Abstandssensor 1 erfindungsgemäß nicht nur im Anstellwinkel Φ, sondern zusätzlich um eine senkrechte Achse drehbar angeordnet wird. Wird der Sensor um diese senkrechte Achse gedreht, so beschreibt der Strahl des Laser-Abstandssensors 1 eine Fläche auf der Mantelfläche eines Kegels bzw. Kegelstumpfes. Mit dieser Kinematik werden die mit dem jeweiligen Laser-Abstandssensor gemessenen Reflexionsabstände I_{R} unabhängig vom jeweils ausgeführten Schwenkwinkel α. Damit ist es nicht erforderlich, diesen in Echtzeit messtechnisch zu erfassen und zu verrechnen, um die Reflexionshöhen h_{R} und ihre Streuung zu messen.

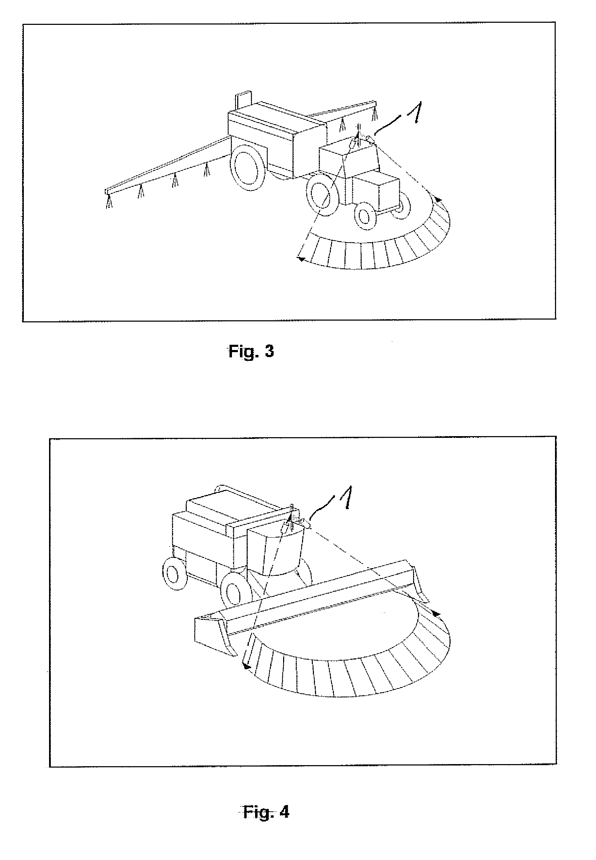

Fig. 3 zeigt eine perspektivische Ansicht einer Sensoranordnung an einem Traktor. Der Laser-Abstandssensor 1 arbeitet mit einem eingegrenzten Schwenkwinkel α, zum Beispiel α ≈ 90°, in welchem er hin und her bewegt wird. Die Montagehöhe h_{S}, der Anstellwinkel Φ und der Schwenkwinkel α des Laser-Abstandssensors bestimmen die Breite des erfassten Streifens des Pflanzenbestands.

Fig. 4 ist eine analoge Darstellung eines Laser-Abstandssensors 1 an einem Mähdrescher.

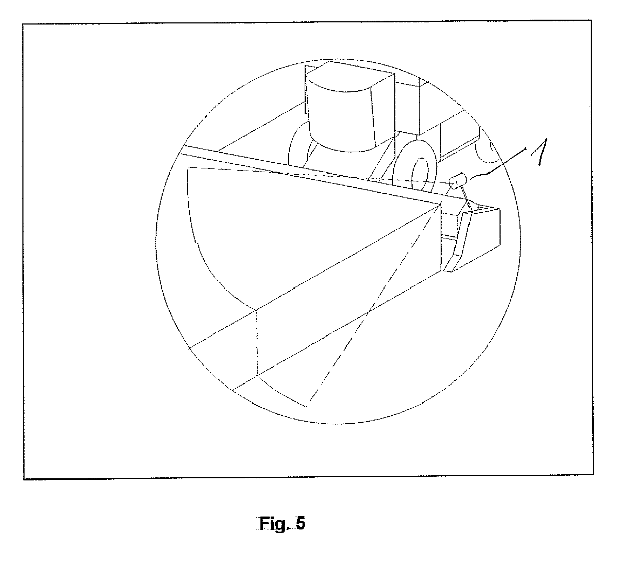

Fig. 5 zeigt die Anordnung eines Laser-Abstandssensors am Schneidwerk eines Mähdreschers. Um die Bestandeskante des Pflanzenbestandes, die als sich abrupt ändernde Reflexionshöhen I_{R} messbar ist, erkennen zu können, ist in diesem Fall der Schwenkwinkel αso bemessen, dass der Laserstrahl des Laser-Abstandssensors 1 ausreichend weit die Stoppeln außerhalb vor der Bestandeskante abtastet.

Mit dieser Form der Sensoranbringung und -führung können die Messwerte vom Stoppelbereich (geringe Reflexionshöhe I_{R}) und der Bestandeskante (große Reflexionshöhe I_{R}) für die automatische Fahrtrichtungs- und Schnittbreitenregelung des Mähdreschers sowie die Messwerte vom noch nicht abgeschnittenen Bestandesstreifen zur Regelung der Vorfahrtgeschwindigkeit entsprechend der Bestandesdichte der zu erntenden Kultur genutzt werden. Voraussetzung ist hierbei, dass der Schwenkwinkel α in Echtzeit gemessen und mit den gemessenen Reflexionsabständen I_{R} bzw. den Reflexionshöhen h_{R} zeitgleich verrechnet wird.

Um die Bestandeskante sicher erkennen zu können, sollten in ihrem Bereich ausreichend Messwerte gewonnen werden. Dies ist vorzugsweise durch eine Kurbelschwinge oder Kurbelschleife zu erreichen, bei der einer der beiden Umkehrpunkte im Bereich der Bestandeskante liegt. Durch Nutzen dieser kinematischen Eigenschaften entstehen infolge der reduzierten Winkelgeschwindigkeiten in den Umkehrpunkten bei gleicher Messfrequenz mehr Messwerte, die eine sicherere softwaretechnische Bestimmung der Bestandeskante unterstützen.

### Liste der Bezugszeichen

- 1: Laser-Abstandssensor
- Φ: Anstellwinkel zur Senkrechten der Landmaschine
- α: Schwenkwinkel
- h_{R}: Reflexionshöhe
- h_{S}: Höhe des Sensors über der Bodenoberfläche
- I_{R}: gemessener Reflexionsabstand
- RG: Auftreffpunkt des Laserstrahls auf der Bodenoberfläche

## Patentansprüche

1. Verfahren zur Erfassung des Pflanzenbestandes auf Landmaschinen mittels mindestens eines Laser-Abstandssensors, der in einer Montagehöhe, die größer ist als die zu erwartende Höhe des Pflanzenbestandes, jeweils in einem definierten Winkel (ϕ) zu der Landmaschine geneigt an dieser angeordnet ist,
**dadurch gekennzeichnet, dass** die der oder die um eine zu der Landmaschine senkrecht verlaufende Achse drehbar angeordneten Laser-Abstandssensoren in einem definierten Schwenkwinkel (α) gedreht werden.

2. Verfahren nach Anspruch 1, **dadurch gekennzeichnet, dass** der jeweilige Laser-Abstandssensor alternierend in einem Schwenkwinkel (α) gedreht wird, der kleiner als 360° ist.

3. Verfahren nach Anspruch 1 oder 2, **dadurch, gekennzeichnet, dass** der Schwenkwinkel α so bemessen wird, dass der Laserstrahl ausreichend weit den Bereich um die Bestandeskante des Pflanzenbestandes abtastet.

4. Verfahren nach Anspruch 3, **dadurch gekennzeichnet, dass** das Messergebnis für die automatische Fahrtrichtungs- und Geschwindigkeitsregelung der Landmaschine genutzt wird.

5. Verfahren nach Anspruch 3, **dadurch gekennzeichnet, dass** das Messergebnis für die automatische Schnittbreitenregelung der Landmaschine genutzt wird.

6. Anordnung zur Erfassung des Pflanzenbestandes auf Landmaschinen mittels mindestens eines Laser-Abstandssensors (1), der in einer Montagehöhe (h_{S}), die größer ist als die zu erwartende Höhe des Pflanzenbestandes, jeweils in einem definierten Winkel (ϕ) zu der Landmaschine geneigt an dieser angeordnet ist, zur Durchführung des Verfahrens nach Anspruch 1,
**dadurch gekennzeichnet, dass** der oder die Laser-Abstandssensoren (1) um eine zu der Landmaschine senkrecht verlaufende Achse in einem definierten Schwenkwinkel (α)drehbar angeordnet sind.

7. Anordnung nach Anspruch, **dadurch, gekennzeichnet, dass** der Schwenkwinkel (α) kleiner als 360° ist.

8. Anordnung nach Anspruch 6 oder 7, **dadurch gekennzeichnet dass** der oder die Laser-Abstandssensoren (1) durch einen Antriebsmechanismus bewegt werden, der in einem Umkehrpunkt, der im Bereich der Bestandeskante des Pflanzenbestandes liegt, eine geringere Winkelgeschwindigkeit erzeugt als im übrigen Bereich.

9. Anordnung nach Anspruch 8, **dadurch gekennzeichnet, dass** Der Antriebsmechanismus eine Kurbelschwinge ist.
